# DEMANDE DE BREVET EUROPEEN

(11) **EP 1 624 679 A1**
(43) Date de publication de la demande: **08.02.2006**
(21) Numéro de dépôt: 04291988.6
(22) Date de dépôt: 03.08.2004
(51) Int. Cl.: H04N 5/76

(54) **Dispositif et méthode de commande d'appareils audio/vidéo lors d'un appel téléphonique**

(71) Demandeur: Nagra France Sarl, 75015 Paris (FR)
(72) Inventeur: Wendling, Bertrand, 78220 Viroflay (FR)
(74) Mandataire: Wenger, Joel-Théophile

(57) **Abrégé**

Le but de la présente invention est de proposer un dispositif et une méthode permettant de gérer les appels téléphoniques survenant lors de la visualisation d'un programme audio/vidéo tout en laissant la possibilité à l'utilisateur de pouvoir visualiser l'intégralité du programme diffusé après une conversation téléphonique quelle qu'en soit sa durée.

Ce but est atteint par un dispositif (DC) de commande d'appareils audio/vidéo, ledit dispositif (DC) étant connecté à une ligne téléphonique (LN) à laquelle est connecté au moins un appareil téléphonique (TEL), à un appareil (TV) de réception de programmes audio/vidéo diffusés et à un enregistreur (ENR) audio/vidéo est caractérisé en ce qu'il comprend des moyens de détection de la prise téléphonique (LN) et des moyens d'activation de l'enregistreur (ENR) audio/vidéo entraînant l'enregistrement du programme audio/vidéo en cours de diffusion lors de la conversation téléphonique.

## Description

### Domaine technique

La présente invention concerne un dispositif et une méthode de commande d'appareils audio/vidéo lors d'un appel téléphonique. Plus particulièrement, le dispositif actionne et gère lesdits appareils lorsqu'un appel téléphonique survient pendant la visualisation et/ou l'audition de programmes audio/vidéo par un utilisateur.

Ce dispositif relié à une ligne téléphonique est connecté à des appareils tels qu'un téléviseur, un lecteur / enregistreur audio / vidéo ou tout autre appareil permettant la réception et la visualisation et / ou l'audition de programmes audio / vidéo diffusés.

### Art antérieur

Il existe plusieurs systèmes de commande sous forme d'un décodeur évolué comprenant des fonctionnalités permettant de détecter et de gérer des appels téléphoniques.

Par exemple le décodeur du document W00203693 comprend la possibilité de transmettre et de recevoir des appels téléphoniques vidéo grâce à une caméra et un microphone. L'appel téléphonique provoque l'arrêt ou la mise en pause d'un programme vidéo en lecture et un message relatif à l'appel est affiché sous forme d'une image, d'un graphique, ou du numéro de téléphone de l'appelant.

Le document US5990927 décrit un décodeur évolué supportant entre autres fonctions: la génération de menus, l'affichage d'une image dans une image, guide de programmes, services interactifs, identification d'appels téléphoniques, réception audio numérique, et le contrôle d'enregistreurs vidéo. Ce document décrit également une télécommande comprenant un microphone permettant de répondre à des appels téléphoniques en combinaison avec les haut-parleurs du téléviseur. L'écran de ce dernier peut afficher des messages ou des images (portrait de l'appelant, icône...) relatifs à l'appel reçu grâce à des données contenues dans une bibliothèque stockées dans une mémoire du décodeur.

Le dispositif du document W00182567 consiste en un répondeur téléphonique utilisant un décodeur connecté à un enregistreur vidéo numérique. Ce dernier est équipé d'un disque dur servant à stocker différents paramètres et des données telles que des messages téléphoniques et des identifiants d'appelants. Une télécommande permet de sélectionner les appels sur un menu affiché sur l'écran du téléviseur pour les écouter et répondre si nécessaire.

Le document US6535590 décrit un système de téléphonie et une méthode pour établir des communications téléphoniques en utilisant un téléviseur et un décodeur connecté au réseau téléphonique. Le décodeur comprend un microphone et un dispositif de commande tel qu'un clavier et/ou une télécommande. L'utilisateur peut établir des communications téléphoniques par le biais d'un menu adéquat affiché sur l'écran du téléviseur et à l'aide de la télécommande et/ou du clavier.

Le document EP1039735 traite d'un système qui comprend un ordinateur conçu pour traiter des appels téléphoniques selon un protocole "voice-over-data" comme celui gérant la transmission de la voix via Internet. Un utilisateur peut suspendre un appel sans le déconnecter et effectuer d'autres actions en ligne ou prendre un second appel. Cette invention englobe également une variante où l'ordinateur est un décodeur de TV numérique connecté à une ligne téléphonique.

Les dispositifs de l'art antérieur évoqués ci-dessus permettent tous de gérer un appel téléphonique survenant lors de la visualisation d'un programme soit en avertissant l'utilisateur par des messages et/ou en jouant le rôle d'un répondeur téléphonique soit en autorisant la prise de l'appel tout en utilisant les moyens attachés au téléviseur (haut-parleurs, télécommande) à la place du combiné téléphonique en tant que tel.

Par contre, l'inconvénient principal de ces dispositifs est que l'utilisateur manque une partie du programme diffusé depuis le début de l'appel téléphonique jusqu'à la fin de la conversation. Cette période d'interruption qui peut durer plusieurs dizaines de minutes peut causer un préjudice à un utilisateur qui a payé un programme particulier diffusé qu'une seule fois, par exemple dans le cas de la télévision à péage sans abonnement dite PPV (Pay per View).

### But de l'invention

Le but de la présente invention est de proposer un dispositif et une méthode de commande permettant de pallier les inconvénients des dispositifs et des procédés de l'art antérieur. Le dispositif décrit ci-après permet de gérer les appels téléphoniques tout en laissant la possibilité à l'utilisateur de pouvoir visualiser ou écouter l'intégralité du programme diffusé après la conversation téléphonique quelle qu'en soit sa durée.

### Résumé de l'invention

Ce but est atteint par un dispositif de commande d'appareils audio/vidéo, ledit dispositif étant connecté à une ligne téléphonique à laquelle est connecté au moins un appareil téléphonique, à un appareil de réception de programmes audio/vidéo diffusés et à un enregistreur audio/vidéo est caractérisé en ce qu'il comprend des moyens de détection de la prise téléphonique et des moyens d'activation de l'enregistreur audio/vidéo entraînant l'enregistrement du programme audio/vidéo en cours de diffusion lors de la conversation téléphonique.

La présente invention propose également une méthode de commande d'appareils audio/vidéo lors d'un appel téléphonique, lesdits appareils étant connectés à un dispositif de commande relié à une ligne téléphonique à laquelle est connecté au moins un appareil téléphonique consistent en un appareil de réception de programmes audio/vidéo diffusés et en un enregistreur audio/vidéo, ladite méthode est caractérisée en ce qu'elle comprend les étapes suivantes:
- détection par le dispositif de commande de la prise de la ligne téléphonique effectuée par l'appareil téléphonique,
- transmission d'un signal de commande activant l'enregistrement du programme audio/vidéo en cours de diffusion lors de la conversation téléphonique.

Lors d'un appel téléphonique l'utilisateur décroche le combiné occasionnant la prise de la ligne qui est détectée par le dispositif. A ce moment, un signal de commande peut être transmis à l'appareil de réception de programmes audio/vidéo en l'occurrence le téléviseur afin d'en baisser ou couper le son pouvant perturber la conversation téléphonique. Un autre signal de commande est transmis à l'enregistreur vidéo actionnant l'enregistrement du programme en cours de diffusion.

L'enregistrement continue durant toute la conversation et au-delà, jusqu'à ce que l'utilisateur décide de l'arrêter, par exemple à la fin de l'émission.

II peut revenir à l'endroit du début de l'enregistrement à sa convenance. L'utilisateur peut ainsi visualiser la partie du programme précédemment enregistrée tandis que le programme courant est en cours d'enregistrement. Ce procédé connu sous le nom de "time shifting" permet de décaler la visualisation du programme d'un intervalle de temps correspondant à la durée de la conversation téléphonique. L'utilisateur ne manque donc aucune partie du programme diffusé quelle que soit la longueur de cet intervalle.

Par "prise ou relâchement de ligne" on entend une mise en ou hors service de la ligne téléphonique dans le but d'établir ou de couper une communication avec un correspondant que ce soit sur une ligne analogique ou sur une ligne numérique. Cette prise ou relâchement de ligne se traduit par des variations de tension et de courant dans le cas d'une ligne analogique ou par des séquences numériques dans le cas de lignes numériques du type ISDN (Integrated Services Digital Network) par exemple.

L'invention sera mieux comprise grâce à la description détaillée qui va suivre et qui se réfère aux figures annexées données à titre d'exemples nullement limitatifs.

### Brève description des figures

La figure 1 illustre un schéma bloc d'une configuration utilisant le dispositif selon l'invention connecté à un téléviseur, un enregistreur audio/vidéo et à une ligne téléphonique.

La figure 2 illustre le schéma bloc d'une variante où le dispositif est intégré dans un décodeur de télévision numérique à péage du type PVR (Personal Video Recorder) connecté à une ligne téléphonique

### Réalisations préférées de l'invention

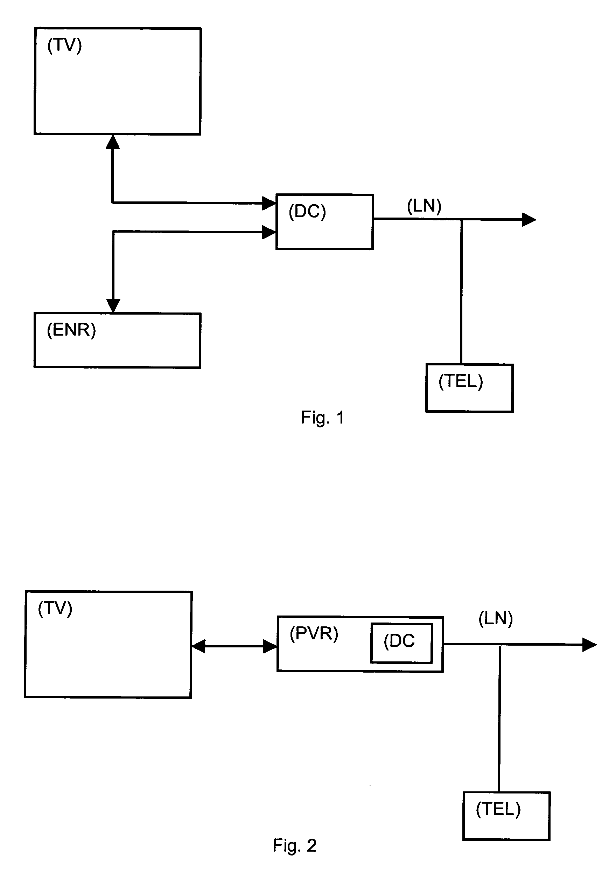

Le schéma bloc de la figure 1 montre le dispositif (DC) selon l'invention connecté à un téléviseur (TV), à un enregistreur audio/vidéo (ENR) et à une ligne téléphonique (LN) sur laquelle est connecté un appareil téléphonique (TEL). Selon cette configuration le dispositif (DC) agit en quelque sorte comme une télécommande gérant le téléviseur (TV) et l'enregistreur (ENR) lorsque le combiné de l'appareil téléphonique (TEL) est décroché par l'utilisateur suite à un appel signalé par une sonnerie et raccroché à la fin de la conversation.

Les connexions avec le téléviseur (TV) et avec l'enregistreur (ENR) peuvent être constituées par une liaison sans fil à lumière infrarouge comme dans le cas d'une télécommande de téléviseur usuelle ou à ondes hertziennes comme dans le cas par exemple des liaisons sans fil entre un ordinateur et ses périphériques.

Lors d'un appel téléphonique deux situations peuvent se présenter:
a) l'appareil téléphonique (TEL) sonne à plusieurs reprises et l'utilisateur décroche le combiné. Le dispositif (DC) ayant détecté les sonneries suivies du décrochage transmet un signal au téléviseur (TV) et à l'enregistreur (ENR). Le signal transmis au téléviseur (TV) peut agir de plusieurs manières sur celui-ci comme par exemple atténuer ou interrompre le son afin de ne pas perturber la conversation téléphonique, actionner l'affichage d'un message sur l'écran informant l'utilisateur que le programme en cours est enregistré.
   L'enregistreur (ENR) stocke le programme en cours de visualisation de préférence sur un disque dur.
   L'utilisateur reprend alors la visualisation du programme par la lecture de la partie enregistrée pendant la conversation tout en maintenant l'enregistrement du programme en cours selon la technique du "time-shifting" mentionnée plus haut. De cette façon l'utilisateur peut visualiser la totalité du programme différée d'une période dépendant de la durée de la conversation téléphonique.
   Selon une variante, la méthode selon l'invention comprend les étapes additionnelles suivantes:
   - détection du relâchement de la ligne téléphonique effectuée par l'appareil téléphonique,
   - transmission d'un signal de commande libérant la lecture du programme audio/vidéo à partir du moment de l'activation de l'enregistrement.

   Lors du raccrochage du combiné, le dispositif (DC) détecte le relâchement de la ligne téléphonique et transmet une commande à l'enregistreur (ENR) entraînant le retour automatique au début de la partie du programme enregistrée permettant la visualisation immédiate de la partie "manquée" depuis la prise de ligne. Le programme en cours s'enregistre jusqu'à ce que l'utilisateur stoppe l'enregistreur à sa convenance.
b) l'appareil téléphonique (TEL) sonne à plusieurs reprises sans que l'utilisateur décroche le combiné. Dans un premier cas aucune prise de ligne n'est détectée par le dispositif (DC) et aucune commande n'est transmise ni au téléviseur (TV) ni à l'enregistreur (ENR).

Dans un second cas un répondeur téléphonique prend la ligne et transmet un message à l'appelant pendant une certaine période avant de relâcher la ligne. Cette action pourrait être détectée par le dispositif (DC) s'il ne possède pas de moyen pour distinguer une prise de ligne provoquée par un décrochage manuel du combiné téléphonique de celle provoquée automatiquement par le répondeur.

Ce problème peut être résolu par la transmission d'un signal supplémentaire au dispositif (DC) par le combiné après un décrochage manuel. Le signal peut être transmis sous une forme analogue à celle des signaux transmis au téléviseur (TV) et à l'enregistreur (ENR). Ce dernier ne démarrera alors seulement si une prise de ligne suivie du signal émis par le combiné est détectée.

Selon une variante, lorsque le répondeur prend la ligne et déclenche l'enregistrement du programme diffusé en cours, un message est affiché sur l'écran du téléviseur (TV) proposant à l'utilisateur à désactiver manuellement l'enregistrement à l'aide de la télécommande du téléviseur, celle-ci transmettant un signal soit à l'enregistreur (ENR), soit au dispositif de commande (DC).

Le schéma bloc de la figure 2 représente une configuration où le dispositif (DC) selon l'invention est inclus dans un décodeur (PVR) numérique équipé d'un disque dur connu sous l'appellation (PVR) (Personal Video Recorder). Ce type de décodeur (PVR) est parfois connecté à une ligne téléphonique (LN) servant de voie de retour utilisée lors de la maintenance de ses logiciels de fonctionnement par exemple.

Le dispositif (DC) capable de détecter la prise de la ligne téléphonique et le relâchement de la ligne transmet les signaux de commande via la connexion, en général un câble, qui le relie au téléviseur (TV) et via le circuit interne du décodeur (PVR) pour l'activation de l'enregistrement du programme audio/vidéo sur le disque dur. Le dispositif peut également agir directement sur le niveau du signal audio de sortie du décodeur.

Selon un mode de réalisation, lors de la fin de la conversation téléphonique détectée par le dispositif (DC), une commande est envoyée à l'enregistreur pour débuter la lecture du programme au moment du début de l'appel téléphonique. L'enregistrement continue avec la diffusion en cours alors que la lecture du programme enregistré s'effectue selon un temps décalé correspondant à la durée de l'appel. Ceci est possible grâce à l'utilisation de disque électronique à accès direct contrairement aux cassettes vidéo qui ont un accès séquentiel.

Dans le cas où plusieurs téléphones seraient reliés sur la même ligne physique, la méthode de l'invention ne trouble pas une personne regardant la télévision dans le salon quand bien même l'appel est pris dans une autre pièce. En effet, le déclenchement de l'enregistrement n'empêche pas de continuer à afficher le programme en direct. Il suffit d'envoyer une commande pour annuler cette opération d'enregistrement grâce à la télécommande.

Dans la variante où un combiné émettant un signal au dispositif de commande (DC) est utilisé, la prise de ligne effectuée par d'autres appareils sur la même ligne n'aura aucune influence car seul le combiné situé à proximité du dispositif (DC) pourra activer l'enregistrement.

Le dispositif de commande de la présente invention peut également être inclus dans un terminal mobile DVB-H (Digital Video Broadcasting-Hand Held Terminal). Ce dernier est constitué par exemple d'un téléphone mobile équipé de la fonctionnalité de réception de programmes audio/vidéo diffusés par un système défini selon les normes ETSI (European Telecommunications Standards Institute) DVB et d'une mémoire de grande capacité (mémoire statique ou disque dur).

Lorsque l'utilisateur de ce téléphone mobile reçoit un appel, via le réseau mobile du type GSM (Global System for Mobile Communications), UMTS (Universal Mobile Telecommunications System) ou autre, pendant la visualisation d'un programme audio/vidéo, le dispositif de l'invention permet de stocker le programme en cours dans la mémoire après avoir détecté la connexion au réseau mobile (prise de ligne). Après déconnexion du réseau (relâchement de la ligne) l'utilisateur peut lire le contenu mémorisé depuis le début de la conversation téléphonique tout en enregistrant le programme audio/vidéo en cours.

## Revendications

1. Dispositif (DC) de commande d'appareils audio/vidéo, ledit dispositif (DC) étant connecté à une ligne téléphonique (LN) à laquelle est connecté au moins un appareil téléphonique (TEL), à un appareil (TV) de réception de programmes audio/vidéo diffusés et à un enregistreur (ENR) audio/vidéo est **caractérisé en ce qu'**il comprend des moyens de détection de la prise téléphonique (LN) et des moyens d'activation de l'enregistreur (ENR) audio/vidéo entraînant l'enregistrement du programme audio/vidéo en cours de diffusion lors de la conversation téléphonique.

2. Dispositif selon la revendication 1, **caractérisé en ce qu'**il comprend en outre des moyens de commande de l'appareil de réception de programmes audio/vidéo (TV), ces moyens transmettant un signal entraînant l'atténuation ou l'interruption du son émis par ledit appareil (TV).

3. Dispositif selon la revendication 2, **caractérisé en ce que** les moyens de commande de l'appareil (TV) de réception de programmes audio/vidéo transmettent un signal entraînant l'affichage d'un message sur l'écran dudit appareil (TV).

4. Dispositif selon la revendication 1 **caractérisé en ce que** les connexions à l'appareil (TV) de réception de programmes audio/vidéo et à l'enregistreur (ENR) audio/vidéo sont constituées par une liaison sans fil à lumière infrarouge.

5. Dispositif selon la revendication 1 **caractérisé en ce que** les connexions à l'appareil (TV) de réception de programmes audio/vidéo et à l'enregistreur (ENR) audio/vidéo sont constituées par une liaison sans fil à ondes hertziennes.

6. Dispositif selon la revendication 1 **caractérisé en ce qu'**il comprend des moyens de détection de relâchement de la ligne téléphonique (LN) libérant la visualisation du programme audio/vidéo enregistré à partir du moment de la prise de ligne.

7. Dispositif selon la revendication 1 **caractérisé en ce qu'**il est inclus dans un décodeur (PVR) numérique équipé d'un disque dur, ledit décodeur (PVR) étant connecté à l'appareil (TV) de réception de programmes audio/vidéo et à la ligne téléphonique (LN).

8. Dispositif selon la revendication 7 **caractérisé en ce qu'**il comporte des moyens de détection de prise de la ligne téléphonique (LN), lesdits moyens transmettant des signaux de commande via la connexion à l'appareil (TV) de réception de programmes audio/vidéo et via le circuit interne du décodeur (PVR) activant l'enregistrement du programme audio/vidéo sur le disque dur.

9. Dispositif selon la revendication 1 **caractérisé en ce qu'**il est inclus dans un terminal mobile DVB-H (Digital Video Broadcasting-Hand Held Terminal) équipé de moyens de connexion à un réseau de téléphonie mobile et d'une mémoire de grande capacité.

10. Dispositif selon la revendication 9 **caractérisé en ce qu'**il comporte des moyens de détection de connexion et de déconnexion au réseau téléphonique mobile, lesdits moyens transmettant des signaux de commande activant le stockage du programme audio/vidéo dans la mémoire.

11. Méthode de commande d'appareils audio/vidéo lors d'un appel téléphonique, lesdits appareils étant connectés à un dispositif (DC) de commande relié à une ligne téléphonique (LN) à laquelle est connecté au moins un appareil téléphonique (TEL) consistent en un appareil (TV) de réception de programmes audio/vidéo diffusés et en un enregistreur (ENR) audio/vidéo, ladite méthode est **caractérisée en ce qu'**elle comprend les étapes suivantes:
- détection par le dispositif (DC) de commande de la prise de la ligne téléphonique (LN) effectuée par l'appareil téléphonique (TEL),
- transmission d'un signal de commande activant l'enregistrement du programme audio/vidéo en cours de diffusion lors de la conversation téléphonique,

12. Méthode selon la revendication 11 **caractérisée en ce qu'**elle comprend les étapes additionnelles suivantes:
- détection du relâchement de la ligne téléphonique effectuée par l'appareil téléphonique (TEL),
- transmission d'un signal de commande libérant la lecture du programme audio/vidéo à partir du moment de l'activation de l'enregistrement.

13. Méthode selon la revendication 11 **caractérisée en ce qu'**elle comprend une étape de transmission d'un signal de commande à l'appareil (TV) de réception de programmes audio/vidéo, ledit signal activant l'atténuation ou l'interruption du son émis par ledit appareil (TV).

14. Méthode selon la revendication 13 **caractérisée en ce que** le signal transmis à l'appareil (TV) de réception de programmes audio/vidéo entraîne l'affichage d'un message sur l'écran dudit appareil (TV).

15. Méthode selon la revendication 14 **caractérisée en ce que** le message affiché comporte une proposition de désactivation manuelle de l'enregistrement au moyen d'une télécommande lorsqu'une prise de ligne et détectée.

16. Méthode selon la revendication 11 **caractérisée en ce qu'**un signal supplémentaire est transmis au dispositif (DC) par le combiné téléphonique de l'appareil téléphonique (TEL) après un décrochage manuel dudit combiné.

17. Méthode selon la revendication 16 **caractérisée en ce que** l'enregistrement du programme audio/vidéo en cours démarre lorsque le dispositif (DC) détecte une prise de la ligne téléphonique et lorsque ledit dispositif (DC) reçoit ledit signal supplémentaire émis par le combiné téléphonique.
